# EUROPÄISCHE PATENTSCHRIFT

(11) **EP 4 433 312 B1**
(45) Veröffentlichungstag und Bekanntmachung des Hinweises auf die Patenterteilung: **27.08.2025**
(21) Anmeldenummer: 22777221.7
(22) Anmeldetag: 09.09.2022
(51) Int. Cl.: B60C 9/22, B60C 9/00

(54) **FAHRZEUGLUFTREIFEN MIT EINER GÜRTELBANDAGE**
PNEUMATIC VEHICLE TYRE WITH A BELT BANDAGE
PNEUMATIQUE DE VÉHICULE AVEC BANDAGE DE CEINTURE

(30) Priorität: 19.11.2021 DE 102021213031
(43) Veröffentlichungstag der Anmeldung: 25.09.2024
(73) Patentinhaber: Continental Reifen Deutschland GmbH, 30175 Hannover (DE)
(72) Erfinder: REESE, Wolfgang, 30175 Hannover (DE)
(74) Vertreter: Continental Corporation
(86) Internationale Anmeldenummer: PCT/DE2022/200213
(87) Internationale Veröffentlichungsnummer: WO 2023/088520

(56) Entgegenhaltungen:
- EP-A1- 3 254 870
- EP-A1- 3 738 789
- EP-B1- 3 350 363

## Beschreibung

Die Erfindung betrifft einen Fahrzeugluftreifen aufweisend eine Karkasse insbesondere radialer Bauart mit textilen Karkassfestigkeitsträgern, einen radial außerhalb der Karkasse angeordneten Gürtel, sowie eine radial außerhalb des Gürtels angeordnete Gürtelbandagenlage einer Gürtelbandage, wobei die Gürtelbandagenlage textile Korde als Festigkeitsträger, welche im Wesentlichen parallel zueinander angeordnet und in elastomeres Material eingebettet sind, aufweist, wobei die Korde jeweils genau zwei Garne aufweisen, wobei die zwei Garne Garne aus Polyamid 6.6 (PA 6.6) sind, welche die gleiche Feinheit aufweisen und miteinander zum Kord endverdreht sind,
dadurch gekennzeichnet, dass
die Korde (20) bei einer Dehnung von 4% einen Tangenten-Modul von 9,3 N/% bis 14 N/%, bevorzugt von 9,5 N/% bis 13 N/%, besonders bevorzugt von 11 N/% bis 12,5 N/%, aufweisen, und
dass der Twistfaktor des Kordes (20) 120 bis 220 beträgt, wobei der Twistfaktor definiert ist als Twistfaktor = Twist [t/m] x (Feinheit [dtex]/ 10000)^{1/2}.

Fahrzeugluftreifen mit Festigkeitsträgerlagen aufweisend Festigkeitsträger sind hinlänglich bekannt. So ist für Fahrzeugluftreifen eine Karkasse insbesondere radialer Bauart mit textilen Festigkeitsträgern bekannt. Bei einer Karkasse radialer Bauart schließen die Festigkeitsträger der Karkasse im Bereich von Seitenwänden des Reifens einen Winkel von maximal 10°, insbesondere maximal 6°, mit der radialen Richtung rR des Reifens ein. Der Gürtel kann zwei Festigkeitsträgerlagen aufweisen, deren Festigkeitsträger gegenläufige Steigungsrichtung aufweisen.

Weiter ist für Fahrzeugluftreifen bekannt, eine Gürtelbandage zu verwenden, die eine oder mehrere Gürtelbandagenlagen aufweist, zumindest die Gürtelränder abdeckt, wobei die eine oder mehrere Gürtelbandagenlagen parallel und im Wesentlichen in Umfangsrichtung verlaufende Festigkeitsträger in Form von im Gummi eingebetteten Korden enthält. Diese Gürtelbandage dient dazu, insbesondere im Hochgeschwindigkeitseinsatz, eine Erhebung des Reifen durch die im Fahrbetrieb auftretenden Fliehkräfte zu verhindern.

Die Gürtelbandage wird bei der Reifenherstellung in Form von Lagen, Streifen oder Einzel-Korden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen.

Die Korde der Gürtelbandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit, d.h. eine gute Dimensionsstabilität, gewährleisten. Um diesen Anforderungen zu genügen, sollten sich die Korde bis zu einer Dehnung von ca. 3 bis 4 % mit mäßigem Kraftaufwand und ab einer höheren Dehnung nur noch mit sehr hohem Kraftaufwand dehnen lassen.

Als Material für die Festigkeitsträger der Gürtelbandagenlage der Gürtelbandage ist es bekannt, Korde aus einem oder zwei Garnen aus PA 6.6 zu verwenden, da PA 6.6 ein für die Hochgeschwindigkeitstauglichkeit vorteilhaftes Schrumpfverhalten sowie eine gute Ermüdungsbeständigkeit hinsichtlich alternierender Zug- und Druck-Belastungen an und neben der Gürtelkante aufweist. Bekannt und üblich ist beispielsweise der Einsatz eines Kordes der Konstruktion PA 6.6 1400 dtex x 2.

Die EP 3 738 789 A1 betrifft eine Festigkeitsträgerlage eines Fahrzeugluftreifens, wobei die Festigkeitsträgerlage einen Festigkeitsträger mit zumindest einem Polyamidgarn aus miteinander verdrehten Filamenten aus Polyamid aufweist. Die EP 3 254 870 A1 betrifft eine gummierte Verstärkungslage für Gegenstände aus elastomerem Material, wobei die Verstärkungslage eine Vielzahl an parallelen und beabstandet zueinander angeordneten Festigkeitsträgern aufweist, wobei jeder Festigkeitsträger ein Cord ist, welcher aus wenigstens zwei verdrehten Multifilamentgarnen aus Polyamid 6.6 endverdreht ist.

Ein Nachteil von PA 6.6 ist allerdings der geringe Tangenten-Modul, der die Hochgeschwindigkeitstauglichkeit begrenzt. Zur Verbesserung des Tangenten-Moduls ist es bekannt, Hybridkorde aus einem Garn aus PA 6.6 und einem Garn aus Aramid einzusetzen. Derartige Korde sind allerdings teuer und weisen eine nachteilige Ermüdungsbeständigkeit, sensiblere Haftungseigenschaften sowie geringere Schrumpfkräfte auf.

Die EP 3 350 363 A1 betrifft einen Verstärkungscord für die Decklage, der die zwischen der Lauffläche und dem Gürtelpaket angeordnete Verstärkungsschicht für die Decklage in Fahrzeugreifen für Kraftfahrzeuge bildet.

Aufgabe ist es daher einen Fahrzeugluftreifen, insbesondere für einen Personenkraftwagen, zur Verfügung zu stellen, der eine weiter verbesserte Hochgeschwindigkeitstauglichkeit aufweist.

Dies wird dadurch erreicht, dass die Korde bei einer Dehnung von 4% einen Tangenten-Modul von 9,3 N/% bis 14 N/%, bevorzugt von 9,5 N/% bis 13 N/%, besonders bevorzugt von 11 N/% bis 12,5 N/%, aufweisen.

Der Tangenten-Modul eines Kordes bei einer bestimmten Dehnung entspricht der Steigung der Kraft-Dehnungskurve bei der jeweiligen Dehnung des Kordes, wobei die Kraft-Dehnungskurve ermittelt ist gemäß ASTM D 885 / ASTM D 885 M. Die Kraft-Dehnungskurve kann ermittelt sein am verstreckten und gedippten und mit einer Haftvermittlung versehenen Kord vor Einbringung in das elastomere Material.

Erstaunlicherweise hat sich gezeigt, dass ein derartiger Fahrzeugluftreifen durch den erhöhten Tangenten-Modul der Korde der Gürtelbandagenlage der Gürtelbandage eine weiter verbesserte Hochgeschwindigkeitstauglichkeit aufweist.

Der Kord aus zwei Garnen aus PA 6.6 weist weiterhin für die Hochgeschwindigkeitstauglichkeit vorteilhafte Schrumpfeigenschaften sowie eine gute Ermüdungsbeständigkeit auf. Der vergleichsweise hohe Tangenten-Modul des Kordes bei 4% Dehnung von mindestens 9,3 N/%, bevorzugt von mindestens 9,5 N/%, besonders bevorzugt von 11 N/%, ermöglicht vorteilhaft hohe Umfangskräfte des Reifens, vor allem für den Einsatz unter hohen Geschwindigkeiten. Die im Hochgeschwindigkeitseinsatz auftretenden hohen Fliehkräfte können so besser gebündelt werden und die Hochgeschwindigkeitstauglichkeit ist verbessert. Der hohe Tangenten-Modul erwirkt eine Reduzierung des dynamischen Wachstums und eine Reduzierung von Vibrationen im Hochgeschwindigkeitseinsatz. Eine Beschränkung des Tangenten-Modul des Kordes auf höchstens 14 N/% sichert eine ausreichende Erhebung mit moderaten Kräften beim Reifenbau.

Im Vergleich zur Verwendung eines Hybridkords aufweisend Aramid ist der mit dem Kord aus PA 6.6 ausgestattete Reifen günstig in den Materialkosten. Weiter weist der Kord aus PA 6.6 eine verbesserte Ermüdungsbeständigkeit, höhere Schrumpfkräfte und eine einfachere Prozessierbarkeit als der Hybridkord aufweisend Aramid auf.

Die Gürtelbandagenlage der Gürtelbandage ist mit ihren guten Schrumpfeigenschaften und ihrem erhöhten Tangenten-Modul hervorragend dazu geeignet, den im Hochgeschwindigkeitseinsatz auftretenden Fliehkräfte entgegenzuhalten, die Gürtelkanten unten zuhalten und damit eine, für die Hochgeschwindigkeit wichtige, runde Kontur des Reifens auszubilden.

Die Korde der Gürtelbandagenlage der Gürtelbandage sind wie für Festigkeitsträger der Gürtelbandagenlage üblich in einem Winkel zwischen 0° und 5° zur Umfangsrichtung des Reifens angeordnet, insbesondere entlang einer axialen Breite des Reifens gewickelt oder gespult.

Eine vorteilhafte Ausführungsform ist dadurch gegeben, dass die Gürtelbandagenlage bei 4 % Dehnung der Gürtelbandagenlage in Erstreckungsrichtung der Korde einen Tangenten-Modul pro cm Breite der Gürtelbandagenlage von 8300 N/cm bis 14000 N/cm, bevorzugt von 8500 N/cm bis 13000 N/cm, aufweist.

Der Tangenten-Modul pro cm Breite der Gürtelbandagenlage entspricht dem Tangenten-Modul der Korde mal der Anzahl der Korde pro cm Breite der Gürtelbandagenlage. Es hat sich gezeigt, dass ein Fahrzeugluftreifen mit einer derartigen Gürtelbandagenlage der Gürtelbandage eine besonders gute Hochgeschwindigkeitstauglichkeit bei gleichzeitig ausreichender Erhebung im Reifenbau aufweist.

Eine vorteilhafte Ausführungsform ist dadurch gekennzeichnet, dass die Korde die Konstruktion PA 6.6 1880 dtex x 2 aufweisen.

Es sind somit zwei Garne aus PA 6.6 der Feinheit 1880 dtex miteinander zum Kord endverdreht. Aus Messungen der Kraft-Dehnungskurve eines solchen Kordes hat es sich gezeigt, dass ein solcher Kord im Vergleich zu einem Kord der Konstruktion PA 6.6 1400 dtex x 2 trotz einer nur geringfügigen Vergrößerung des Durchmessers bereits einen für die Hochgeschwindigkeitstauglichkeit vorteilhaft vergrößerten Tangenten-Modul aufweist.

So weist ein Kord der Konstruktion PA 6.6 1880 dtex x 2 einen Tangenten-Modul von 11,8 N/% auf, wohingegen der entsprechende Referenzkord der Konstruktion PA 6.6 1400 dtex x 2 einen um 2,8 N/% geringeren Tangenten-Modul von nur 9,0 N/% aufweist, jeweils gemessen bei einer Dehnung von 4 %. Der Kord und der Referenzkord weisen jeweils einen gleichen Twistfaktor von 150 auf.

Auch weist der dickere Kord mit dem erhöhten Materialeinsatz an PA 6.6 höhere Schrumpfkräfte auf, was weiter vorteilhaft für die Hochgeschwindigkeitstauglichkeit ist.

Ein Fahrzeugluftreifen aufweisend eine derartige Gürtelbandagenlage der Gürtelbandage weist somit eine verbesserte Hochgeschwindigkeitstauglich bei nur geringfügig erhöhtem Rollwiderstand auf. Gleichzeitig ist der Reifen günstig in seinem Materialeinsatz und der Herstellung.

Eine vorteilhafte Ausführungsform ist dadurch gekennzeichnet, dass die Korde mit einer Fadendichte von 80 epdm bis 100 epdm, bevorzugt von 85 epdm bis 95 epdm, besonders bevorzugt mit einer Fadendichte von 90 epdm, angeordnet sind.

Erstaunlicherweise hat sich gezeigt, dass eine derartige Gürtelbandagenlage bei guten Schrumpfeigenschaften einen hervorragenden Tangenten-Modul pro cm Breite der Gürtelbandagenlage aufweist.

Eine vorteilhafte Ausführungsform ist dadurch gegeben, dass die Korde die Konstruktion PA 6.6 1880 dtex x 2 aufweisen und mit einer Fadendichte von 80 epdm bis 100 epdm, bevorzugt von 85 epdm bis 95 epdm, besonders bevorzugt mit einer Fadendichte von 90 epdm, angeordnet sind.

Erstaunlicherweise hat es sich gezeigt, dass eine erfindungsgemäße Gürtelbandagenlage F1, welche Korde der Konstruktion 1880 dtex x 2 bei einer Anordnung der Korde mit einer Fadendichte von 90 epdm aufweist, einen Tangenten-Modul bei 4 % Dehnung der Gürtelbandagenlage in Erstreckungsrichtung der Korde aufweist, der um über 2500 N/cm höher ist als der entsprechende Tangenten-Modul einer Referenzlage R1, welche Referenzkorde der Konstruktion 1400 dtex x 2 aufweist, die ebenfalls mit einer Fadendichte von 90 epdm angeordnet sind. Die erfindungsgemäße Gürtelbandagenlage F1 weist bei einer Dehnung von 4% ein Tangenten-Modul pro cm Breite von 10580 N/cm auf. Die Korde und die Referenzkorde weisen jeweils einen gleichen Twistfaktor von 150 auf.

Ein Fahrzeugluftreifen aufweisend eine solche erfindungsgemäße Gürtelbandagenlage F1 in der Gürtelbandage weist eine hervorragende Hochgeschwindigkeitstauglichkeit auf. Dicke und Materialeinsatz der Gürtelbandagenlage sind nur geringfügig erhöht, so dass der Rollwiderstand nicht wesentlich erhöht ist.

Weiter hat sich im Vergleich der beiden Gürtelbandagenlagen F1 und R1 gezeigt, dass bei einer Dehnung von 19% der jeweiligen Lage die Festigkeit der genannten erfindungsgemäßen Gürtelbandagenlage F1 um 526 N/cm gegenüber der Gürtelbandagenlage R1 erhöht ist. Gleichzeitig ist die Bruchenergie der erfindungsgemäßen Gürtelbandagenlage F1 im Gegensatz zur Gürtelbandagenlage R1 gesteigert, wodurch sich Vorteile im Plunger ergeben.

Jedes Garn der Gürtelbandagenlage kann in S- oder in Z- Richtung verdreht sein. Eine vorteilhafte Ausführungsform ist dadurch gegeben, dass die zwei Garne des Kords die gleiche Drehrichtung aufweisen. Sie sind also entweder beide in S- und/oder in Z- Richtung verdreht. Erfindungsgemäß sind die zwei Garne des Kordes in S- oder in Z-Richtung miteinander zum Kord endverdreht. Bevorzugt ist die Drehrichtung zum Kord der Drehrichtung der Garne entgegengesetzt. Hierdurch sind interne Spannungen im Kord reduziert.

Um eine zuverlässige Haftung von textilen Kordes zum Gummi zu gewährleisten, ist es vorteilhaft, dass die Korde mit einer Haftimprägnierung zur Gewährleistung der Haftung der Korde zum Gummi versehen sind. Beispielsweise kann diese Haftimprägnierung mit einem RFL-Dip im 1- oder 2-Bad-Verfahren erfolgen. Es sind aber auch alle weiteren dem Fachmann bekannten Verfahren und Haftmittel zur Imprägnierung denkbar.

Erfindungsgemäß beträgt der Twistfaktor des Kordes 120 bis 220, bevorzugt 130 bis 200, besonders bevorzugt 140 bis 180.

Der Twistfaktor ist definiert als Twistfaktor = Twist [t/m] x (Feinheit [dtex]/ 10000)^{1/2}. Der Twistfaktor ist ein Maß für die Endverdrehung pro Meter des Kordes, bezogen auf die Feinheit des Kordes. Dieser Twistfaktor stellt einen vorteilhaften Kompromiss bezüglich Ermüdungsbeständigkeit und Festigkeit dar. Ein geringerer Twistfaktor wäre nachteilig in Bezug auf die Ermüdungsbeständigkeit, ein höherer Twistfaktor würde eine geringere Festigkeit des Kordes bedeuten.

Eine vorteilhafte Ausführungsform ist dadurch gekennzeichnet, dass zumindest ein Kord über die gesamte axiale Erstreckung des Gürtels und darüber hinaus angeordnet ist.

Somit ist die Gürtelbandagenlage aufweisend den zumindest einen Kord eine durchgehende Gürtelbandagenlage, die sich über die gesamte axiale Erstreckung des Gürtels erstreckt und die Gürtelkanten abdeckt. Hierdurch kann sich die vorteilhafte Wirkung des hohen Tangenten-Moduls über die gesamte axiale Erstreckung des Gürtels inklusive der Gürtelkanten entfalten.

Fahrzeugluftreifen für einen Personenkraftwagen, Vans oder Leichtlastkraftwagen weisen in der Regel eine Konstruktion mit einem Gürtel aufweisend zumindest zwei Festigkeitsträgerlagen sowie eine Karkasse mit textilen Festigkeitsträgern auf. Der Gürtel ist, zumindest im Bereich der Gürtelkanten, von einer ein- oder mehrlagigen Gürtelbandage abgedeckt. Die Karkasse weist textile Festigkeitsträger auf, die im Bereich von Seitenwänden einen Winkel von maximal 6° mit der radialen Richtung rR des Reifens einschließen können.

Eine vorteilhafte Ausführungsform ist dadurch gekennzeichnet, dass es sich um einen Personenkraftwagen handelt.

Die Hochgeschwindigkeitstauglichkeit ist für Reifen von Personenkraftwagen von besonderer Relevanz und Vorteil.

Eine vorteilhafte Ausführungsform ist dadurch gekennzeichnet, dass es sich um einen Leichtlastkraftwagen oder um einen Van handelt.

Alle in dieser Beschreibung wiedergegebenen Ausführungsformen des erfindungsgemäßen Fahrzeugluftreifens stellen Beispiele der Ausgestaltung der Erfindung dar und sind nicht einschränkend zu sehen. Entsprechend sind auch durch einzelne oder mehrere Merkmale einer Ausführungsform allein oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnung, die ein Ausführungsbeispiel darstellt, näher erläutert. Dabei zeigt die
Fig. 1 einen radialen Querschnitt durch einen erfindungsgemäßen Fahrzeugluftreifen,
Fig. 2 einen Schnitt durch eine Gürtelbandagenlage.

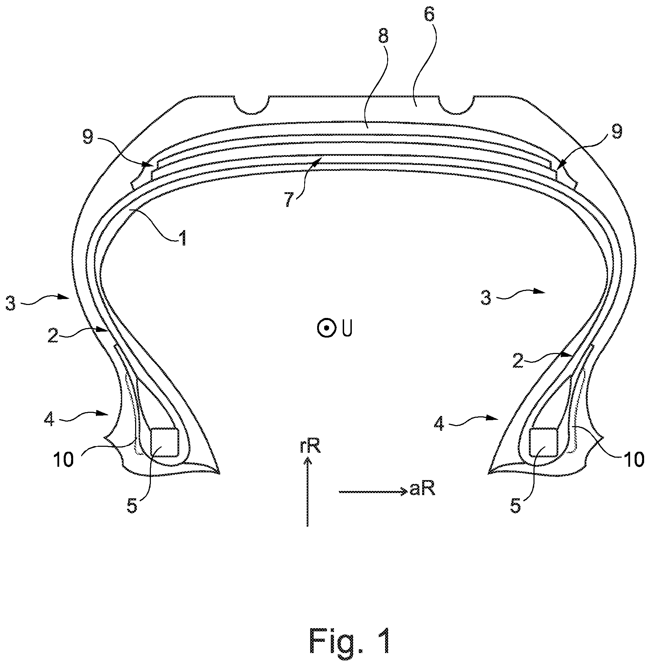

Die Figur 1 zeigt einen radialen Querschnitt durch einen erfindungsgemäßen Fahrzeugluftreifen für einen Personenkraftwagen. Die Erfindung eignet sich aber ebenso für einen Reifen für einen Leichtkraftwagen. Die wesentlichen Bauteile, aus welchen sich der dargestellte Fahrzeugluftreifen zusammensetzt, sind eine weitgehend luftundurchlässige Innenschicht 1, eine Karkasse 2 insbesondere radialer Bauart mit textilen Karkassfestigkeitsträgern, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist. Die Karkassfestigkeitsträger können im Bereich von Seitenwänden einen Winkel von maximal 6° mit der radialen Richtung rR des Reifens einschließen. Weiter weist der Fahrzeugluftreifen einen radial außerhalb der Karkasse 2 befindlichen profilierten Laufstreifen 6 und einen zwischen dem Laufstreifen 6 und der Karkasse 2 angeordneten, insbesondere zwei Festigkeitsträgerlagen beinhaltenden Gürtel 7, welcher radial außen mit einer ein- oder mehrlagigen Gürtelbandage 8 abgedeckt ist, auf. Die Gürtelbandage 8 deckt zumindest die Gürtelkanten 9 ab und beinhaltet zumindest eine Gürtelbandagenlage.

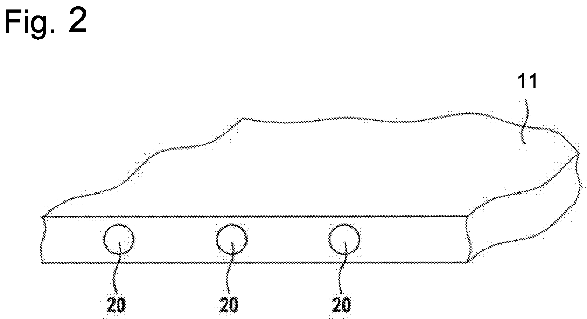

Die Gürtelbandagenlage weist textile Korde 20 als Festigkeitsträger auf, welche im Wesentlichen parallel zueinander angeordnet und in elastomeres Material 11 eingebettet sind, wobei die Korde 20 jeweils genau zwei Garne aufweisen und wobei die zwei Garne Garne aus Polyamid 6.6 (PA 6.6) sind, welche die gleiche Feinheit aufweisen und miteinander zum Kord 20 endverdreht sind. Eine Schnitt durch eine entsprechende Gürtelbandagenlage ist in Fig. 2 dargestellt. Die Korde 20 sind nur schematisch dargestellt. Die Korde 20 der Gürtelbandagenlage der Gürtelbandage 8 sind wie für Festigkeitsträger der Gürtelbandagenlage üblich in einem Winkel zwischen 0° und 5° zur Umfangsrichtung des Reifens angeordnet, insbesondere entlang einer axialen Breite des Reifens gewickelt oder gespult.

Die Gürtelbandage 8 kann eine, zwei oder mehrere Gürtelbandagenlagen gemäß der Erfindung aufweisen. Bevorzugt sind alle Gürtelbandagenlagen der Gürtelbandage 8 des Reifens gemäß der Erfindung ausgeführt. Bevorzugt ist zumindest ein Kord 20 über die gesamte axiale Erstreckung des Gürtels 7 und darüber hinaus angeordnet.

Die Korde 20 weisen bei einer Dehnung von 4% einen Tangenten-Modul von 9,3 N/% bis 14 N/%, bevorzugt von 9,5 N/% bis 13 N/%, besonders bevorzugt von 11 N/% bis 12,5 N/%, auf. Das Tangenten-Modul eines Kordes bei einer bestimmten Dehnung entspricht der Steigung der Kraft-Dehnungskurve bei der jeweiligen Dehnung des Kordes, wobei die Kraft-Dehnungskurve ermittelt ist gemäß ASTM D 885 / ASTM D 885 M. Die Kraft-Dehnungskurve kann ermittelt sein am verstreckten und gedippten und mit einer Haftvermittlung versehenen Kord vor Einbringung in das elastomere Material.

Die Gürtelbandagenlage der Gürtelbandage 8 weist bei 4 % Dehnung der Gürtelbandagenlage in Erstreckungsrichtung der Korde 20 einen Tangenten-Modul pro cm Breite der Gürtelbandagenlage von 8300 N/cm bis 14000 N/cm, bevorzugt von 8500 N/cm bis 13000 N/cm, auf.

Die Korde 20 der Festigkeitsträger können die Konstruktion PA 6.6 1880 dtex x 2 aufweisen. Sie können mit einer Fadendichte von 80 epdm bis 100 epdm, bevorzugt von 85 epdm bis 95 epdm, besonders bevorzugt mit einer Fadendichte von 90 epdm, angeordnet sein. Sie können erfindungsgemäß einen Twistfaktor von 120 bis 220, bevorzugt 130 bis 200, besonders bevorzugt 140 bis 180, aufwiesen.

### Bezugszeichenliste

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Gürtelkante
- 11: elastomeres Material
- 20: Kord

- aR: axiale Richtung
- rR: radiale Richtung
- U: Umfangsrichtung

## Patentansprüche

1. Fahrzeugluftreifen aufweisend eine Karkasse (2) mit textilen Karkassfestigkeitsträgern, einen radial außerhalb der Karkasse angeordneten Gürtel (7), sowie eine radial außerhalb des Gürtels (7) angeordnete Gürtelbandagenlage einer Gürtelbandage (8), wobei die Gürtelbandagenlage textile Korde (20) als Festigkeitsträger, welche im Wesentlichen parallel zueinander angeordnet und in elastomeres Material (11) eingebettet sind, aufweist, wobei die Korde (20) jeweils genau zwei Garne aufweisen, wobei die zwei Garne Garne aus Polyamid 6.6 sind, welche die gleiche Feinheit aufweisen und miteinander zum Kord (20) endverdreht sind,
**dadurch gekennzeichnet, dass**
die Korde (20) bei einer Dehnung von 4% einen Tangenten-Modul von 9,3 N/% bis 14 N/%, bevorzugt von 9,5 N/% bis 13 N/%, besonders bevorzugt von 11 N/% bis 12,5 N/%, aufweisen, und
dass der Twistfaktor des Kordes (20) 120 bis 220 beträgt, wobei der Twistfaktor definiert ist als Twistfaktor = Twist [t/m] x (Feinheit [dtex]/ 10000)^{1/2}.

2. Fahrzeugluftreifen gemäß Anspruch 1, **dadurch gekennzeichnet, dass** die Gürtelbandagenlage bei 4 % Dehnung der Gürtelbandagenlage in Erstreckungsrichtung der Korde (20) einen Tangenten-Modul pro cm Breite der Gürtelbandagenlage von 8300 N/cm bis 14000 N/cm, bevorzugt von 8500 N/cm bis 13000 N/cm, aufweist.

3. Fahrzeugluftreifen gemäß zumindest einem der vorhergehenden Ansprüche, **dadurch gekennzeichnet, dass** die Korde (20) die Konstruktion PA 6.6 1880 dtex x 2 aufweisen.

4. Fahrzeugluftreifen gemäß zumindest einem der vorhergehenden Ansprüche, **dadurch gekennzeichnet, dass** die Korde (20) mit einer Fadendichte von 80 epdm bis 100 epdm, bevorzugt von 85 epdm bis 95 epdm, besonders bevorzugt mit einer Fadendichte von 90 epdm, angeordnet sind.

5. Fahrzeugluftreifen gemäß zumindest einem der vorhergehenden Ansprüche, **dadurch gekennzeichnet, dass** der Twistfaktor des Kordes (20) 130 bis 200, bevorzugt 140 bis 180, beträgt.

6. Fahrzeugluftreifen gemäß zumindest einem der vorhergehenden Ansprüche, **dadurch gekennzeichnet, dass** die Korde (20) eine Haftimprägnierung zur Gewährleistung der Haftung der Korde zum Gummi aufweisen.

7. Fahrzeugluftreifen gemäß zumindest einem der vorhergehenden Ansprüche, **dadurch gekennzeichnet, dass** zumindest ein Kord (20) über die gesamte axiale Erstreckung des Gürtels (7) und darüber hinaus angeordnet ist.

8. Fahrzeugluftreifen gemäß zumindest einem der vorhergehenden Ansprüche, **dadurch gekennzeichnet, dass** es sich um einen Personenkraftwagen handelt.

9. Fahrzeugluftreifen gemäß zumindest einem der Ansprüche 1-7, **dadurch gekennzeichnet, dass** es sich um einen Leichtlastkraftwagen oder um einen Van handelt.

## Claims

1. Pneumatic vehicle tyre having a carcass (2) with textile carcass strength elements, a belt (7) arranged radially outside the carcass, and a belt bandage ply of a belt bandage (8) arranged radially outside the belt (7), wherein the belt bandage ply has textile cords (20) as strength elements, which are arranged substantially parallel to one another and are embedded in elastomeric material (11), wherein the cords (20) each have precisely two yarns, wherein the two yarns are yarns of polyamide 6.6, which have the same linear density and are end-twisted together to form the cord (20),
**characterized in that**
the cords (20) at an elongation of 4% have a tangent modulus of 9.3 N/% to 14 N/%, preferably of 9.5 N/% to 13 N/%, particularly preferably of 11 N/% to 12.5 N/%, and
**in that** the twist factor of the cord (20) is 120 to 220, wherein the twist factor is defined as twist factor = twist [t/m] x (linear density [dtex]/ 10000)^{1/2}.

2. Pneumatic vehicle tyre according to Claim 1, **characterized in that** the belt bandage ply at 4% elongation of the belt bandage ply in the direction of extent of the cord (20) has a tangent modulus per cm width of the belt bandage ply of 8300 N/cm to 14000 N/cm, preferably of 8500 N/cm to 13000 N/cm.

3. Pneumatic vehicle tyre according to at least one of the preceding claims, **characterized in that** the cords (20) have the structure PA 6.6 1880 dtex x 2.

4. Pneumatic vehicle tyre according to at least one of the preceding claims, **characterized in that** the cords (20) are arranged with a thread density of 80 epdm to 100 epdm, preferably of 85 epdm to 95 epdm, particularly preferably with a thread density of 90 epdm.

5. Pneumatic vehicle tyre according to at least one of the preceding claims, **characterized in that** the twist factor of the cord (20) is 130 to 200, preferably 140 to 180.

6. Pneumatic vehicle tyre according to at least one of the preceding claims, **characterized in that** the cords (20) have an adhesive impregnation to ensure the adhesion of the cords to the rubber.

7. Pneumatic vehicle tyre according to at least one of the preceding claims, **characterized in that** at least one cord (20) is arranged over the entire axial extent of the belt (7) and beyond.

8. Pneumatic vehicle tyre according to at least one of the preceding claims, **characterized in that** the vehicle is a passenger car.

9. Pneumatic vehicle tyre according to at least one of Claims 1-7, **characterized in that** the vehicle is a light-duty vehicle or a van.

## Revendications

1. Pneumatique de véhicule présentant une carcasse (2) avec des supports de résistance de carcasse textiles, une ceinture (7) agencée radialement à l'extérieur de la carcasse, ainsi qu'une couche de bandage de ceinture d'un bandage de ceinture (8) agencée radialement à l'extérieur de la ceinture (7), la couche de bandage de ceinture présentant des câbles textiles (20) en tant que supports de résistance, qui sont agencés essentiellement parallèlement les uns aux autres et sont noyés dans un matériau élastomère (11), les câbles (20) présentant chacun exactement deux fils, les deux fils étant des fils de polyamide 6.6, qui présentent la même finesse et sont torsadés ensemble pour former le câble (20),
**caractérisé en ce que**
les câbles (20) présentent, pour un allongement de 4 %, un module de tangente de 9,3 N/% à 14 N/%, de préférence de 9,5 N/% à 13 N/%, de manière particulièrement préférée de 11 N/% à 12,5 N/%, et
**en ce que** le facteur de torsion du câble (20) est de 120 à 220, le facteur de torsion étant défini comme facteur de torsion = torsion [t/m] x (finesse [dtex]/10 000)^{1/2}.

2. Pneumatique de véhicule selon la revendication 1, **caractérisé en ce que** la couche de bandage de ceinture présente un module de tangente par cm de largeur de la couche de bandage de ceinture de 8 300 N/cm à 14 000 N/cm, de préférence de 8 500 N/cm à 13 000 N/cm, pour un allongement de 4 % de la couche de bandage de ceinture dans la direction d'extension des câbles (20).

3. Pneumatique de véhicule selon au moins l'une quelconque des revendications précédentes, **caractérisé en ce que** les câbles (20) présentent la construction PA 6.6 1880 dtex x 2.

4. Pneumatique de véhicule selon au moins l'une quelconque des revendications précédentes, **caractérisé en ce que** les câbles (20) sont agencés avec une densité de fils de 80 epdm à 100 epdm, de préférence de 85 epdm à 95 epdm, de manière particulièrement préférée avec une densité de fils de 90 epdm.

5. Pneumatique de véhicule selon au moins l'une quelconque des revendications précédentes, **caractérisé en ce que** le facteur de torsion du câble (20) est de 130 à 200, de préférence de 140 à 180.

6. Pneumatique de véhicule selon au moins l'une quelconque des revendications précédentes, **caractérisé en ce que** les câbles (20) présentent une imprégnation adhésive pour assurer l'adhérence des câbles au caoutchouc.

7. Pneumatique de véhicule selon au moins l'une quelconque des revendications précédentes, **caractérisé en ce qu'**au moins un câble (20) est agencé sur toute l'extension axiale de la ceinture (7) et au-delà.

8. Pneumatique de véhicule selon au moins l'une quelconque des revendications précédentes, **caractérisé en ce qu'**il s'agit d'une voiture particulière.

9. Pneumatique de véhicule selon au moins l'une quelconque des revendications 1 à 7, **caractérisé en ce qu'**il s'agit d'un véhicule utilitaire léger ou d'une camionnette.
